# EUROPEAN PATENT APPLICATION

(11) **EP 3 235 382 A1**
(43) Date of publication of application: **25.10.2017**
(21) Application number: 15869388.7
(22) Date of filing: 10.12.2015
(51) Int. Cl.: A01N 25/00, A01N 53/00

(54) **INSECTICIDE COMPOSITION**

(30) Priority: 18.12.2014 ES 201431864
(71) Applicant: Zobele España, S.A., 08019 Barcelona (ES)
(72) Inventor: RIERA GINER, Montserrat, 08019 Barcelona (ES); GOBBER, Cedric, 08019 Barcelona (ES); DOYLE, Dominic, 08019 Barcelona (ES)
(74) Representative: Herrero & Asociados, S.L.
(86) International application number: PCT/ES2015/070892
(87) International publication number: WO 2016/097438

(57) **Abstract**

The insecticide composition comprises an insecticide active ingredient, characterized in that it also comprises a gelling agent and water, and can also comprise a surfactant and an emollient. The insecticide active ingredient is selected preferably from the group consisting of metofluthrin, transfluthrin, empenthrin and mixtures of the same.

The controlled and sustained release of the insecticide active ingredient over time is achieved.

## Description

The present invention relates to an insecticide composition for the controlled and sustained release of active insecticide components at room temperature, particularly in gel form.

### Background of the invention

Air fresheners in gel form have been on the market for decades. These gels comprise few ingredients such as gelling agents, a solvent or a combination of solvents and the oil that provides the perfume.

To ensure stability over time against syneresis, that is, the loss of moisture from the gel on the surface which gives the gel a wet appearance, different solutions have been proposed, such as the addition of cations, for example potassium ions, to the composition.

Furthermore, most existing gels on the market are designed to release volatile chemical products into the environment, such as a perfume to provide a pleasant aroma to the surroundings or to cover bad odors.

Some attempts have been made to spray insect repellent into the environment in gel form. Insect repellents, although they do not kill the insect, serve to prevent bites. Some examples of insect repellents of natural origin are neem oil, citronella oil, eucalyptus oil or cedarwood oil. An insect repellent of synthetic origin is N-N-diethyl-3-methylbenzamide, known as DEET, ethyl butylaminopropionate or IR 3535.

One of the advantages of insect repellents is high volatility, which enables its release at room temperature without needing to heat the dispenser. However, these products provide protection for a very short period of time and have very limited effectiveness. Thus it necessary to find effective solutions to provide long-lasting protection against insects.

A highly efficient alternative is the use of active ingredients that act as an insecticide, in other words, those that kill insects or have a paralyzing effect on them due to the fact that they act on nerve transmission.

These highly efficient insecticide active ingredients have relatively low volatility, which makes it necessary to include an evaporation promoter, such as a heater.

Therefore, the objective of the present invention is to provide a highly effective insecticide composition in gel form that is volatile at room temperature and capable of being evaporating in a controlled and sustained way without an additional source of energy.

### Description of the invention

The insecticide composition according to the present invention resolves the aforementioned drawbacks and has other advantages which are described below.

The insecticide composition according to the present invention comprises an insecticide active ingredient, characterized in that it further comprises a gelling agent and water.

Furthermore, the insecticide composition according to the present invention can also comprise a surfactant and an emollient.

The compounds of the composition should have a low affinity for the insecticide active ingredient, for the purpose of facilitating the evaporation of the active ingredient. The synthetic active ingredients are molecules with low polarity. Preferably, the components should have high polarity and the use of surfactants and/or emulsifiers should be minimized.

Advantageously, the insecticide active ingredient of the insecticide composition according to the present invention is selected from the group consisting of metofluthrin, transfluthrin, empenthrin and mixtures of the same.

Moreover, the gelling agent can be a gelling agent of high polarity based on polyamide polymers. Preferably, it is a polymer ending in a polyalkyleneoxy group (PAOPA) or a polyamide ending in polyether (PEPA), and advantageously it is present in the composition in a concentration between 4% and 50% by weight, in particular, between 5% and 25% by weight.

Alternatively, the gelling agent can be selected from the group consisting of xanthan gum, guar gum, carob bean gum, algae oligosaccharides and combinations of the same, and advantageously, is present in the composition in a concentration between 10% and 50% by weight, in particular, between 15% and 25% by weight.

If desired, the insecticide composition according to the present invention can further comprise a wetting agent, for example an alcohol that contains more than one hydroxyl group, such as glycerol, propylene glycol, polyethylene glycol and mixtures of the same.

Advantageously, the wetting agent is present in the composition in a concentration between 0.1 % and 25% by weight, preferably between 1% and 10% by weight.

Furthermore, the insecticide composition according to the present invention can further comprise a surfactant or a combination of surfactants, the function of which is to solubilize the gelling agent in a large amount of water. The most suitable surfactants are non-ionic surfactants.

Furthermore, the insecticide composition according to the present invention can further comprise a solvent, for example glycol ethers, such as dipropylene glycol n-methyl ether, dipropylene glycol n-butyl ether, or tripropylene glycol methyl ether.

With the insecticide composition according to the present invention controlled and sustained release of the insecticide active ingredient over time is achieved.

### Description of preferred embodiments

The insecticide composition according to the present invention comprises an active ingredient, for example, of a pyrethroid type, a gelling agent and water, and optionally, a combination of surfactants and/or emollients.

The active ingredient is preferably selected from the group consisting of metofluthrin, transfluthrin, empenthrin and mixtures of the same.

Preferably, the objectives of the insecticide composition according to the present invention are mosquitoes, flies and clothes moths. For these reasons, transfluthrin and empenthrin are preferred for moths, and metofluthrin and transfluthrin for flies and mosquitoes.

The gelling agents that have been selected are, for example, polyamide resin ending in a polyalkyleneoxy group or ending in polyether (PEPA). The gelling agent is typically present in an amount between 4% and 50% by weight with respect to the total weight of the composition, preferably between 5% and 25% by weight.

In other embodiments, the gelling agent can be xanthan gum, guar gum, carob bean gum, algae oligosaccharides and combinations of the same, although alternative gelling agents can be proposed, such as mannitol, algin, calcium alginate, sodium phosphate and maltodextrin.

To reduce the effect of syneresis, emulsifier agents can also be included.

Furthermore, a wetting ingredient can also be included. The preferred material for this purpose are polyols, in other words, alcohols that contain more than one hydroxyl group. The polyols that can be used for this purpose include glycerol, propylene glycol, polyethylene glycol and mixtures of the same.

The wetting agents are typically used at a level between 0.1% and 25% by weight, and preferably between 1% and 10% by weight.

The insecticidal composition according to the present invention can also comprise solvents. Preferred solvents should have high solubility in water, which is a good indicator of low affinity with the insecticide active ingredient.

Solvents suitable for this purpose are glycol ethers, such as dipropylene glycol dimethyl ether (DMM), dipropylene glycol methyl ether (DPM) or tripropylene glycol methyl ether (TPM) to control the evaporation rate and duration of the gel.

Three examples of the insecticide composition according to the present invention are set forth here below.
Example 1:
   - Pyrethroid active ingredient (SumiOne®): 0.16% by weight
   - Gelling agent (mixture of xanthan gum, guar gum, carob bean gum and algae oligosaccharides; Polikem CR®): 6.77% by weight
   - Non-ionic surfactant (Oramix®): 2.60% by weight
   - Wetting agent (glycerin): 2.00% by weight
   - Anti-mold ingredient (aqueous formulation of 2-methyl-4-isothiazolin-3-one and 1,2-benzisothiazolin-3-one): 0.49% by weight
   - Water: 87.98% by weight
Example 2:
   - Pyrethroid active ingredient (SumiOne®): 0.16% by weight
   - Gelling agent (mixture of mannitol, algin, calcium alginate and sodium; Polikem IR®): 15.16% by weight
   - Wetting agent (glycerin): 2.59% by weight
   - Anti-mold ingredient (aqueous formulation of 2-methyl-4-isothiazolin-3-one and 1,2-benzisothiazolin-3-one): 0.50% by weight
   - Water: 81.58% by weight
Example 3:
   - Pyrethroid active ingredient (SumiOne®): 0.16% by weight
   - Wetting agent (polyamide resin; HP5®): 15.10% by weight
   - Non-ionic surfactant (Oramix®): 4.02% by weight
   - Surfactant (castor oil, ethoxylate; Emulan EL®): 4.42% by weight
   - Wetting agent (glycerin): 2.56% by weight
   - Anti-mold ingredient (aqueous formulation of 2-methyl-4-isothiazolin-3-one and 1,2-benzisothiazolin-3-one): 0.51% by weight
   - Water: 73.24% by weight

Despite the fact that reference has been made to a specific embodiment of the invention, it is evident for the person skilled in the art that numerous variations and changes may be made to the insecticide described, and that all the aforementioned details may be substituted by other technically equivalent ones, without detracting from the scope of protection defined by the attached claims.

## Claims

1. Insecticide composition comprising an insecticide active ingredient, **characterized in that** it further comprises a gelling agent and water.

2. The insecticide composition according to claim 1, which also comprises a surfactant.

3. The insecticide composition according to claim 1 or 2, which also comprises an emollient.

4. The insecticide composition according claim 1, wherein the insecticide active ingredient is selected from the group consisting of metofluthrin, transfluthrin, empenthrin or mixtures of the same.

5. The insecticide composition according claim 1, wherein the gelling agent is polyamide resin ending in a polyalkyleneoxy group or ending in polyether (PEPA).

6. The insecticide composition according claim 1, wherein the gelling agent is selected from the group consisting of xanthan gum, guar gum, carob bean gum, algae oligosaccharides or combinations of the same.

7. The insecticide composition according claim 1, 5 or 6, wherein the gelling agent is present in the composition in a concentration between 10% and 50% by weight.

8. The insecticide composition according claim 7, wherein the gelling agent is present in the composition between 15% and 25% by weight.

9. The insecticide composition according to any one of the preceding claims, which also comprises a wetting agent.

10. The insecticide composition according to claim 9, wherein the wetting agent is an alcohol that contains more than one hydroxyl group.

11. The insecticide composition according to claim 10, wherein the wetting agent is glycerol, propylene glycol, polyethylene glycol and mixtures of the same.

12. The insecticide composition according to any of the claims 9 to 11, wherein the wetting agent is present in the composition in a concentration between 0.1% and 25% by weight, preferably between 1% and 10% by weight.

13. The insecticide composition according to any one of the preceding claims, which also comprises a solvent.

14. The insecticide composition according to claim 13, wherein the solvent comprises glycol ethers, such as dipropylene glycol dimethyl ether, dipropylene glycol methyl ether, or tripropylene glycol methyl ether.
